# EUROPÄISCHE PATENTSCHRIFT

(11) **EP 3 159 248 B1**
(45) Veröffentlichungstag und Bekanntmachung des Hinweises auf die Patenterteilung: **04.09.2019**
(21) Anmeldenummer: 16177771.9
(22) Anmeldetag: 04.07.2016
(51) Int. Cl.: B62D 35/00

(54) **VORRICHTUNG ZUR VERBESSERUNG DER AERODYNAMIK AN EINEM FAHRZEUG**
DEVICE FOR IMPROVING THE AERODYNAMICS OF A VEHICLE
DISPOSITIF D'AMELIORATION DE L'AERODYNAMIQUE SUR UN VÉHICULE

(30) Priorität: 21.09.2015 DE 102015115887
(43) Veröffentlichungstag der Anmeldung: 26.04.2017
(73) Patentinhaber: WIHAG Fahrzeugbausysteme GmbH, 33602 Bielefeld (DE)
(72) Erfinder:
(74) Vertreter: Dantz, Jan Henning

(56) Entgegenhaltungen:
- WO-A1-2015/154842
- DE-A1-102012 011 082
- US-A- 5 332 280
- US-A- 5 498 059
- US-A1- 2004 119 319
- US-A1- 2009 200 834
- US-A1- 2011 084 516

## Beschreibung

Die vorliegende Erfindung betrifft eine Vorrichtung zur Verbesserung der Aerodynamik an einem Fahrzeug, insbesondere an einer Rückseite eines Lastkraftwagens oder einem Anhängers für einen Lastkraftwagen, nach dem Oberbegriff des Anspruches 1.

Aus der US 4,257,641 ist eine Vorrichtung zur Verbesserung der Aerodynamik an einem Fahrzeug bekannt, bei der an einer Rückseite des Fahrzeuges mehrere Klappen vorgesehen sind, die in einer Fahrposition zu einem Pfeil mit spitzem Ende zusammengefügt werden können. Die Oberseite und die Unterseite sind ebenfalls durch plattenförmige Klappen verschlossen, so dass sich eine gute Aerodynamik an der Rückseite des Fahrzeuges ergibt. Problematisch ist allerdings der aufwändige Aufbau und das mühsame Einklappen und Entfalten der Vorrichtung. Durch die Vielzahl der Klappen und Scharniere wird der Lade- und Endladevorgang behindert. Zudem sind gerade die Klappen im oberen Bereich am Dach schwer zugänglich und müssen daher mit speziellem Werkzeug bewegt werden.

Aus der WO 2012/166023 ist eine aerodynamische Vorrichtung bekannt, bei der Leitelemente verschiebbar an den Wänden des Fahrzeuges gehalten sind. Hierzu muss ein spezieller Aufbau an der Wand vorgesehen werden, was die Herstellung und Montage aufwändig macht. Auch bleibt ein Wandelement im oberen Bereich des Daches für eine Betätigung schlecht zugänglich.

Die US 5,498,059 offenbart eine Vorrichtung zur Verbesserung des Strömungswiderstandes von bewegten Körpern, bei der Paneele bewegbar miteinander verbunden sind, um sie in einer Fahrposition parallel zur Fahrtrichtung auszurichten.

Es ist daher Aufgabe der vorliegenden Erfindung, eine Vorrichtung zur Verbesserung der Aerodynamik an einem Fahrzeug zu schaffen, die einfach aufgebaut und leicht zu bedienen ist.

Diese Aufgabe wird mit einer Vorrichtung mit den Merkmalen des Anspruches 1 gelöst.

Die erfindungsgemäße Vorrichtung zur Verbesserung der Aerodynamik umfasst eine um eine vertikale Achse verschwenkbare Seitenklappe und eine um eine horizontale Achse verschwenkbare Dachklappe, wobei die Seitenklappe über Verbindungsmittel mit der Dachklappe gekoppelt ist und durch ein Verschwenken der Seitenklappe die Dachklappe verschwenkbar ist. Dadurch kann durch ein Bewegen der Seitenklappe die Dachklappe automatisch über die Verbindungsmittel bewegt werden, was die Handhabung vereinfacht, da der Benutzer auch zum Verschwenken der Dachklappe nur die Seitenklappe bewegen muss. Insofern kann die Vorrichtung mit einem einzigen Handgriff von einer inaktiven Position, in der die Seitenklappe und die Dachklappe im Wesentlichen senkrecht zur Fahrtrichtung ausgerichtet sind, in eine aktive Position bewegt werden, in der die Seitenklappe und die Dachklappe im Wesentlichen in Fahrtrichtung ausgerichtet sind. Die Richtungsangaben beziehen sich jeweils auf die Ebene der Dachklappe und der Seitenklappe, die im Wesentlichen plattenförmig ausgebildet sind. Die Seitenklappe und die Dachklappe verbessern in der zur Rückseite hervorstehenden Position die Aerodynamik, da rechtwinklige Kanten vermieden werden und eine definierte Abrisskante an der Dachklappe und der Seitenklappe vorhanden ist, die den Luftwiderstand verringert. Sofern das Fahrzeug rückseitig durch Öffnen der Türen be- und entladen werden soll, können die Seitenklappe und die Dachklappe verschwenkt werden, um das Öffnen der Türen nicht zu behindern.

Gemäß einer bevorzugten Ausgestaltung wird bei einem Verschwenken der Seitenklappe von einer Position im Wesentlichen senkrecht zur Fahrtrichtung in Fahrrichtung die Dachklappe durch die Verbindungsmittel von einer Position im Wesentlichen senkrecht zur Fahrtrichtung in Fahrtrichtung verschwenkt. Die Seitenklappe und die Dachklappe werden somit im Wesentlichen um 90° verschwenkt.

Vorzugsweise weist die Vorrichtung zwei Seitenklappen und zwei Dachklappen auf, wobei jeweils eine Seitenklappe mit einer Dachklappe über Verbindungsmittel verbunden ist. Dadurch kann an einer Rückseite eines LKWs an jeder Tür eine Seitenklappe und eine Dachklappe montiert werden, die dann eine zusammen bewegbare Einheit mit der Tür ausbilden. Die Seitenklappe und die Dachklappe können dann in einer hervorstehenden Position verriegelt oder verrastet werden und optional auch in der an der Tür anliegenden Position verrastet werden, um ein versehentliches Verschwenken zu vermeiden.

In einer erfindungsgemäßen Ausgestaltung umfassen die Verbindungsmittel eine Kurvenführung, an der ein Steuerelement in Form eines Mitnehmers verfahrbar gelagert ist. Die Kurvenführung ist vorzugsweise an einer zur Rückseite des Fahrzeuges gewandten Seite der Dachklappe oder der Seitenklappe vorgesehen, so dass nach außen hin keine hervorstehenden Teile der Kurvenführung die Aerodynamik verschlechtern. Die Kurvenführung ist somit zu der Tür an der Rückseite des Fahrzeuges gewandt.

Erfindungsgemäß wird auch ein Fahrzeug, insbesondere ein Nutzfahrzeug oder ein Anhänger für ein Nutzfahrzeug, bereitgestellt, das einen Laderaum aufweist, der an der Rückseite durch zwei Türen verschlossen ist und ein Dach aufweist, wobei im Bereich der Rückseite eine erfindungsgemäße Vorrichtung zur Verbesserung der Aerodynamik montiert ist. Dabei kann die Seitenklappe an einer rückseitigen Tür über Scharniere gehalten sein. Auch die Dachklappe kann an der Tür über Scharniere gehalten sein, wobei optional die Seitenklappe auch an einer Seitenwand und die Dachklappe an einem Dach des Fahrzeuges montiert werden können.

Für eine besonders gute Aerodynamik verlängert die Dachklappe in der hervorstehenden Position das Dach des Fahrzeuges nach hinten hin. Auch die Seitenklappe kann in der hervorstehenden Position eine Seitenwand des Fahrzeuges nach hinten verlängern, so dass an dem Übergang zwischen Seitenwand und Seitenklappe und Dach und Dachklappe nur geringe Strömungsverluste entstehen.

Die Erfindung wird nachfolgend anhand von zwei Ausführungsbeispielen mit Bezug auf die beigefügten Zeichnungen näher erläutert. Es zeigen:
- Figuren 1A bis 1C: mehrere Ansichten einer nicht erfindungsgemäßen Vorrichtung zur Verbesserung der Aerodynamik an einem Fahrzeug;
- Figuren 2A bis 2C: mehrere Ansichten der Vorrichtung der Figur 1 ohne Fahrzeug;
- Figur 3: eine Ansicht der Vorrichtung der Figur 1 in der eingeklappten Position;
- Figur 4: eine perspektivische Explosionsdarstellung der Vorrichtung der Figur 1;
- Figuren 5A bis 5C: mehrere Ansichten eines zweiten Ausführungsbeispiels einer Vorrichtung zur Verbesserung der Aerodynamik;
- Figuren 6A bis 6C: mehrere Ansichten der Dachklappe der Vorrichtung der Figur 5, und

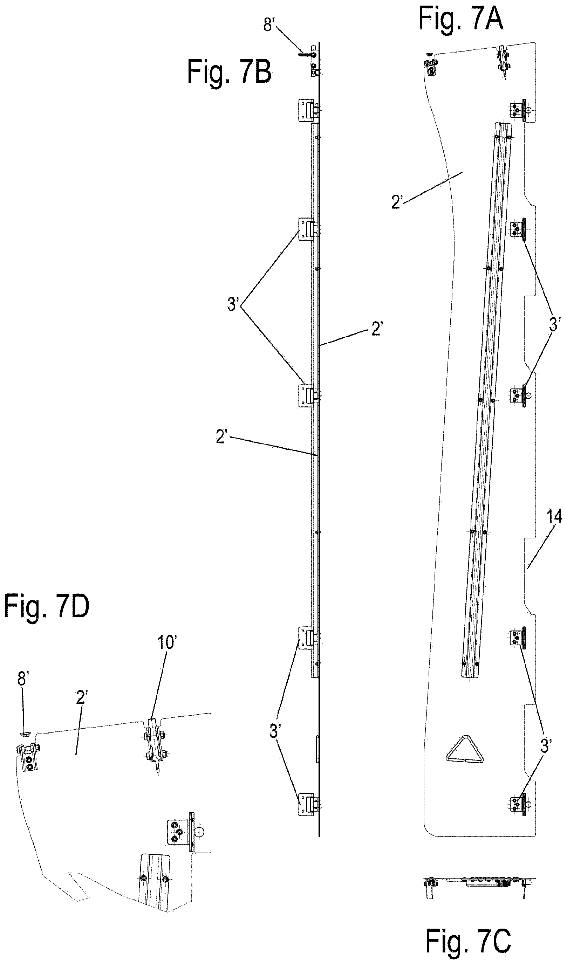

- Figuren 7A bis 7D: mehrere Ansichten der Seitenklappe der Vorrichtung der Figur 5.

Eine Vorrichtung 1 zur Verbesserung der Aerodynamik an einem Fahrzeug kann eine an einer Rückseite des Fahrzeuges, insbesondere an einem Lastkraftwagen oder einem Anhänger eines Lastkraftwagens, angebracht werden. An dem Lastkraftwagen oder dem Anhänger ist ein Laderaum vorgesehen, der an der Rückseite zwei Türen 4 aufweist, die über Scharniere 13 um eine vertikale Achse verschwenkbar sind und über Verschlusselemente 5 in einer geschlossenen Position arretiert werden können. Soll das Fahrzeug nun eine längere Strecke mit hoher Geschwindigkeit zurücklegen, kann die Vorrichtung 1 zur Verbesserung der Aerodynamik ausgeklappt werden, um die rechtwinkligen Kanten zwischen den Türen 4 und den Seitenwänden und den Türen 4 und dem Dach in der Gestaltung zu optimieren.

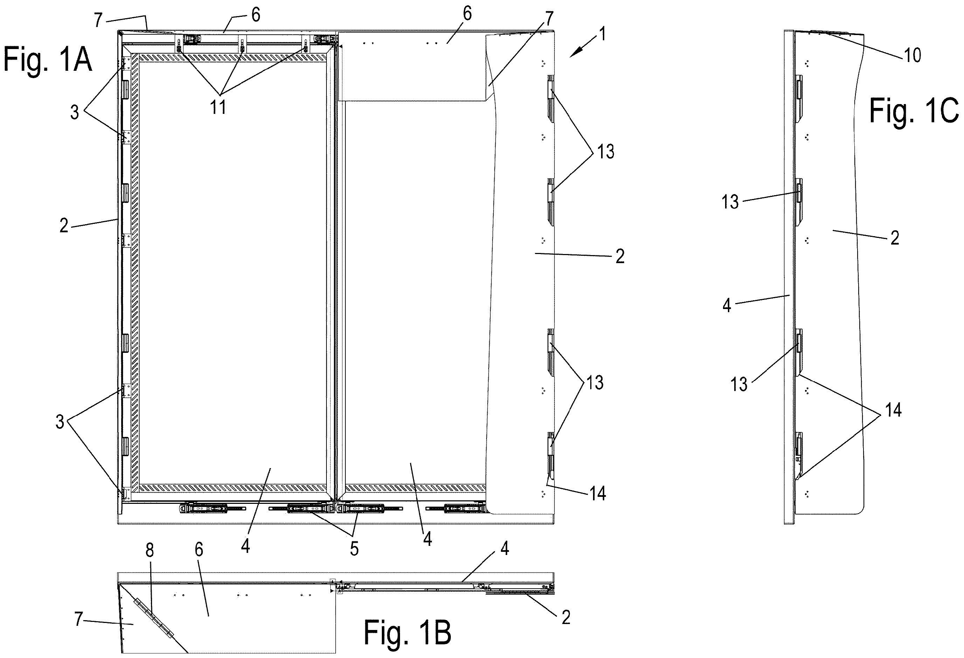

Die Vorrichtung 1 umfasst eine Seitenklappe 2, die über Scharniere 3 verschwenkbar an einer Rückseite einer Tür 4 festgelegt ist. Benachbart zu dem Dach ist an der Tür 4 eine Dachklappe 6 vorgesehen, die über Scharniere 11 verschwenkbar gelagert ist. Die Seitenklappe 2 ist dabei um eine vertikale Achse verschwenkbar, während die Dachklappe 6 um eine horizontale Achse verschwenkbar ist. Die Dachklappe 6 ist über Verbindungsmittel in Form einer Gelenkeinrichtung mit einer dreieckförmigen Platte 7 verbunden und somit zwangsgeführt. Beim Öffnen der Seitenklappe 2 von der auf der rechten Seite in Figur 1A gezeigten eingeklappten Position in eine auf der linken Seite der Figur 1A gezeigte ausgeklappte Position wird die Dachklappe 6 über die Verbindungsmittel zwangsgeführt und ebenfalls in eine hervorstehende Position ausgeklappt. In der hervorstehenden Position verlängert die Seitenklappe 2 eine Seitenwand des Fahrzeuges, und die Dachklappe 6 verlängert eine Ebene des Daches des Fahrzeuges. Die Seitenklappe 2 und die Dachklappe 6 sind aus einem dünnen plattenförmigen Material, beispielsweise aus einem Metallblech oder einer Kunststoffplatte, gebildet, die in der hervorstehenden Position eine definierte Abrisskante ausbilden und somit zur Verbesserung der Aerodynamik beitragen. In der hervorstehenden Position können die Seitenklappe 2 und die Dachklappe 6 verriegelt oder verrastet werden, um ein versehentliches Zusammenfalten zu vermeiden. Auch in der eingefalteten Position können die Seitenklappe 2 und die Dachklappe 6 verrastet oder verriegelt werden, damit diese dann beim Öffnen der Tür 4 einen Be- oder Entladevorgang nicht stören. In der eingeklappten Position liegen die Dachklappe 6 und die Seitenklappe 2 flach auf der Tür 4 auf, wie dies beispielsweise in Figur 1B auf der rechten Seite gezeigt ist.

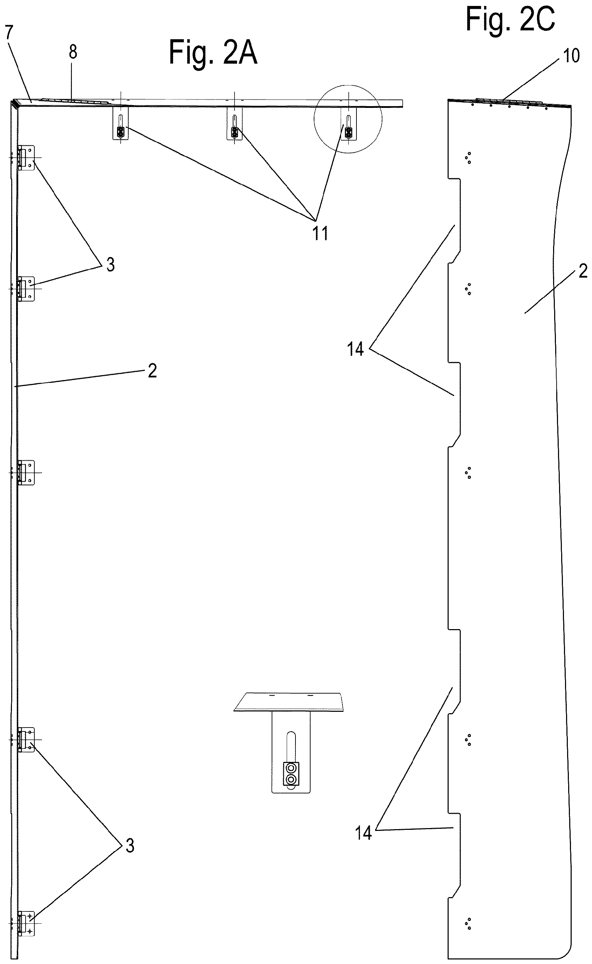

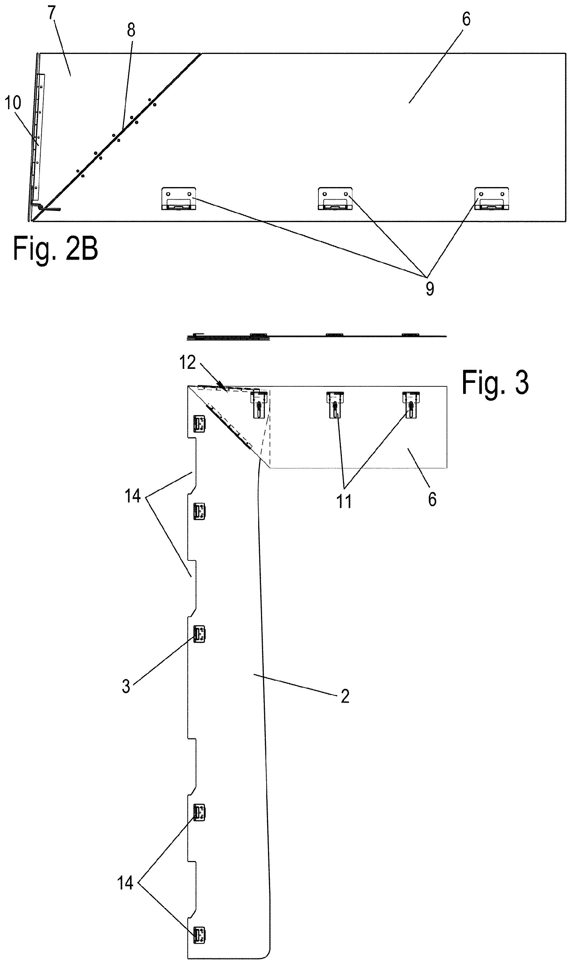

In den Figuren 2A bis 2C ist die Vorrichtung 1 ohne das Fahrzeug dargestellt, und es ist erkennbar, dass die Seitenklappe 2 über mehrere Scharniere 3 verschwenkbar gelagert ist und über eine Gelenkverbindung 10 mit der dreieckförmigen Platte 7 gekoppelt ist. Die dreieckförmige Platte ist über ein weiteres Gelenk 8 gelenkig mit der Dachklappe 6 verbunden, so dass in einem oberen Eckbereich die Dachklappe 6 in einer ausgeklappten Position durch die dreieckförmige Platte 7 verlängert wird. Für das Einklappen wird dann die Dachklappe 6 nach unten und die Seitenklappe 2 zur Tür 4 hin verschwenkt, wodurch die dreieckförmige Platte 7 auf die Dachklappe 6 verschwenkt wird, wie dies auch in Figur 3 zu sehen ist. In dem Eckbereich 12 liegen somit die Dachklappe 6, die dreieckförmige Platte 7 und ein oberes Eck der Seitenklappe 2 aufeinander. Durch Bewegen der Seitenklappe 2 wird die Dachklappe 6 über die dreieckförmige Platte 7 zwangsgeführt.

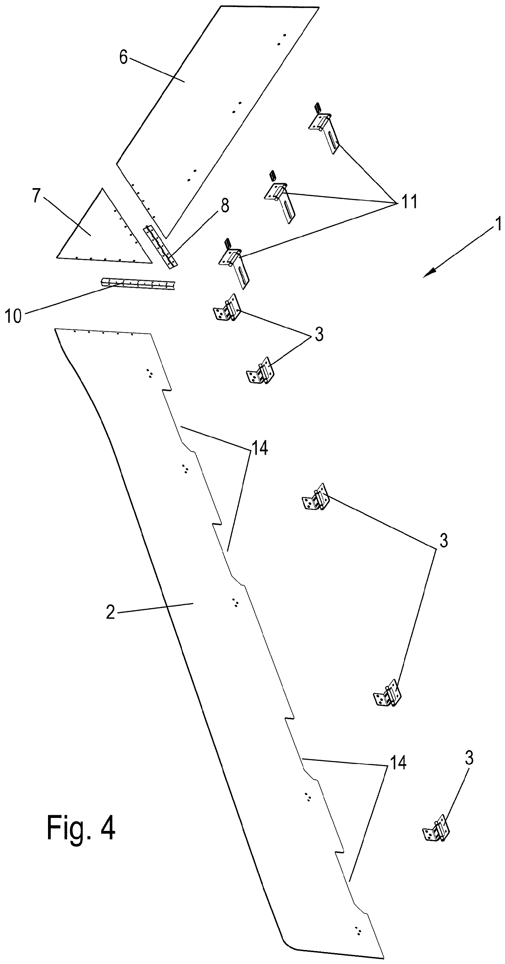

In Figur 4 ist die Vorrichtung 1 in einer perspektivischen Explosionsdarstellung gezeigt. An der Seitenklappe 2 sind mehrere Aussparungen 14 vorgesehen, die im Bereich der Scharniere 13 für die Tür 4 angeordnet sind, damit diese nicht das Öffnen und Schließen der Seitenklappe 2 behindern. Ferner sind an der Seitenklappe 2 über die Höhe verteilt mehrere Scharniere 3 fixiert, beispielsweise durch Verschrauben. Auch an der Dachklappe 6 sind Scharniere 11 fixiert, insbesondere verschraubt oder vernietet.

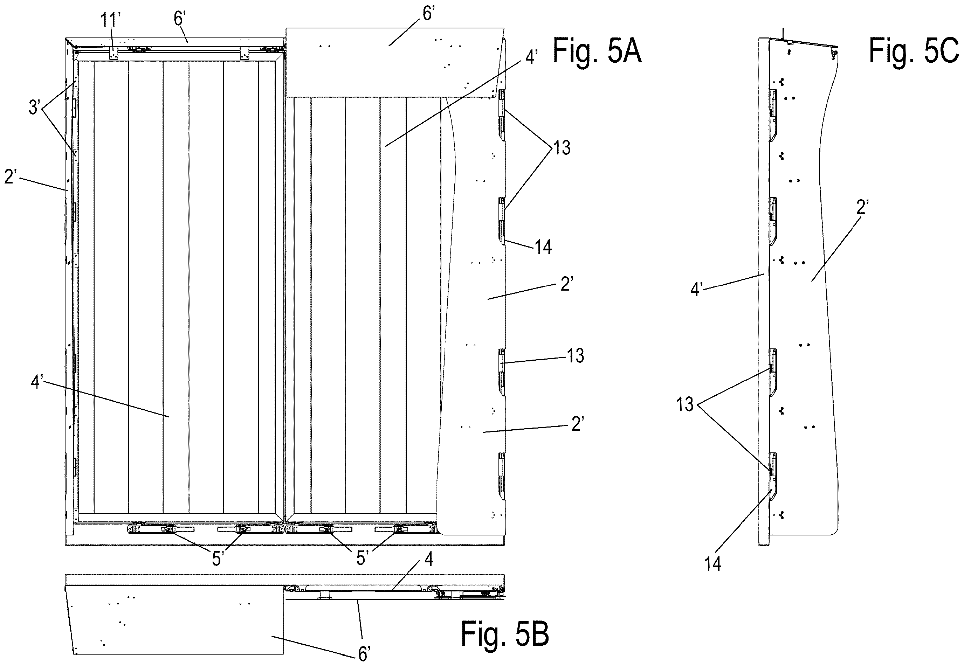

In den Figuren 5A bis 5C ist eine modifizierte Ausführungsform einer Vorrichtung 1' zur Verbesserung der Aerodynamik an einem Fahrzeug gezeigt, die an den rückseitigen Türen 4' des Fahrzeuges montiert ist. Die Türen 4' sind um eine vertikale Achse verschwenkbar und über Verschlusselemente 5' in der Schließposition verriegelbar. An jeder Tür 4' ist eine Seitenklappe 2' verschwenkbar gelagert, wobei in Figur 5A auf der rechten Seite in der Seitenklappe 2' Aussparungen 14 für Scharniere 13 zum Bewegen der Tür 4' vorgesehen sind. Auf der linken Seite der Figur 5A ist die Seitenklappe 2' in einer nach hinten hervorstehenden Position dargestellt, in der auch die Scharniere 3' zur Lagerung der Seitenklappe 2' sichtbar sind. An der Oberseite jeder Tür 4' ist eine Dachklappe 6' um eine horizontale Achse verschwenkbar gelagert, wobei hierfür weitere Scharniere 11' zwischen der Dachklappe 6' und der Tür 4' vorgesehen sind. Die Seitenklappe 2' und die Dachklappe 6' können in einer zusammengeklappten Position, wie sie in Figur 5B auf der rechten Seite dargestellt ist, flach auf der Tür 4' angeordnet werden und in eine hervorstehende Position geklappt werden, wie sie auf der linken Seite in Figur 5B gezeigt ist.

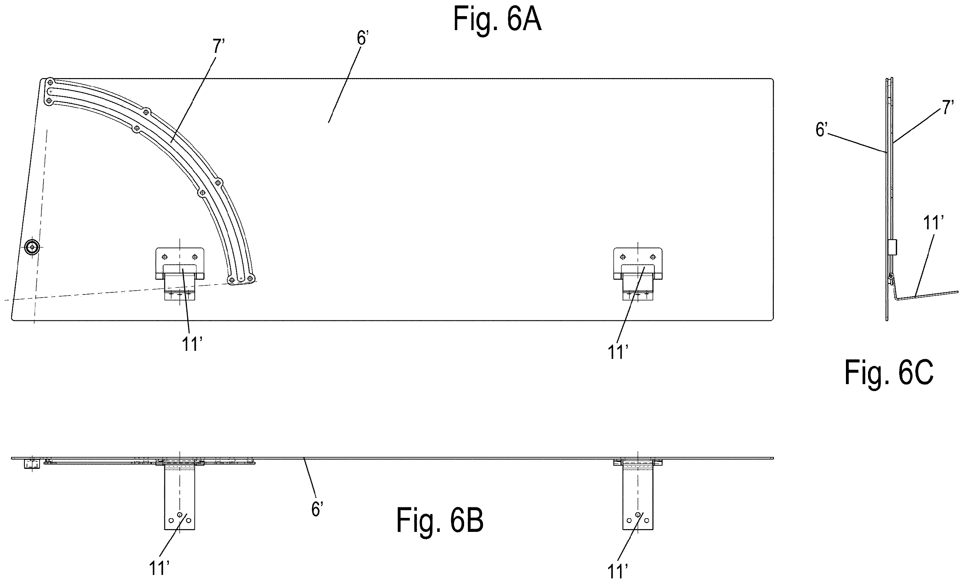

In den Figuren 6A bis 6C ist die Dachklappe 6' im Detail gezeigt, die über zwei Scharniere 11' an der Tür verschwenkbar gelagert ist. An der Unterseite der Dachklappe 6' ist eine bogenförmige Kurvenführung 7' vorgesehen, die eine Führungsbahn für einen Mitnehmer 8' ausbildet, der an der Seitenklappe 2' gelagert ist. Es ist natürlich auch möglich, eine Kurvenführung an der Seitenklappe 2' vorzusehen, die mit einem Mitnehmer an der Dachklappe 6' verbunden ist.

Die Seitenklappe 2' ist in den Figuren 6A bis 6C gezeigt. An der Oberseite der Seitenklappe 2' befindet sich der Mitnehmer 8', der in der Kurvenführung 7' verschiebbar gelagert ist und für eine Zwangsführung der Dachklappe 6' sorgt, wenn die Seitenklappe 2' bewegt wird. Ferner ist an der Seitenklappe 2' an der Oberseite ein Stößel 10' vorgesehen, der zur Verrastung der Seitenklappe 2' in der geöffneten Position und/oder der eingeklappten Position dient.

Auch bei der Seitenklappe 2' kann durch ein Verschwenken von der eingeklappten Position in eine nach hinten hervorstehende Position die Dachklappe 6' ebenfalls verschwenkt werden, wobei entsprechende Kräfte über die Kurvenführung 7' und den Mitnehmer 8' übertragen werden.

In dem dargestellten Ausführungsbeispiel sind als Verbindungsmittel zwischen der Seitenklappe 2 bzw. 2' und der Dachklappe 6 bzw. 6' eine Gelenkeinrichtung und eine Kurvenführung vorgesehen. Es ist natürlich auch möglich, noch andere mechanische Mittel vorzusehen, um die Dachklappe 6 oder 6' bei einem Bewegen der Seitenklappe 2, 2' zwangszuführen.

In den dargestellten Ausführungsbeispielen sind die Seitenklappen 2, 2' und Dachklappen 6, 6' jeweils an einer Tür 4, 4' des Fahrzeuges festgelegt. Es ist auch möglich, die Dachklappe 6, 6' nicht an der Tür, sondern an dem Dach zu fixeren und die Seitenklappen 2, 2' an einer Seitenwand des Fahrzeuges und nicht an der Tür 4, 4'.

### Bezugszeichenliste

- 1, 1': Vorrichtung
- 2, 2': Seitenklappe
- 3, 3': Scharnier
- 4, 4': Tür
- 5, 5': Verschlusselement
- 6, 6': Dachklappe
- 7: Platte
- 7': Kurvenführung
- 8: Gelenk
- 8': Mitnehmer
- 10: Gelenkverbindung
- 10': Stößel
- 11, 11': Scharnier
- 12: Eckbereich
- 13: Scharnier
- 14: Aussparung

## Patentansprüche

1. Vorrichtung (1') zur Verbesserung der Aerodynamik an einem Fahrzeug, insbesondere an einer Rückseite eines Lastkraftwagens oder eines Anhängers für einen Lastkraftwagen, mit einer an einer Seitenwand oder an einer Tür (4) des Fahrzeuges festlegbaren Seitenklappe (2'), die über Scharniere (3') um eine vertikale Achse verschwenkbar gelagert ist, und einer an einem Dach oder einer Tür (4) des Fahrzeuges festlegbaren Dachklappe (6'), die über Scharniere (11') um eine horizontale Achse verschwenkbar gelagert ist, wobei die Seitenklappe (2') über Verbindungsmittel (7') mit der Dachklappe (6') gekoppelt ist, und durch ein Verschwenken der Seitenklappe (2') die Dachklappe (6') verschwenkbar ist, **dadurch gekennzeichnet, dass** die Verbindungsmittel (7') eine bogenförmige Kurvenführung (7') umfassen, die eine Führungsbahn für einen Mitnehmer (8') ausbildet, der in der Kurvenführung (7') verschiebbar gelagert ist und für eine Zwangsführung der Dachklappe (6') sorgt, wenn die Seitenklappe (2') bewegt wird.

2. Vorrichtung nach Anspruch 1, **dadurch gekennzeichnet, dass** bei einem Verschwenken der Seitenklappe (2') von einer Position im Wesentlichen senkrecht zur Fahrtrichtung in Fahrtrichtung die Dachklappe (6') durch die Verbindungsmittel (7') von einer Position im Wesentlichen senkrecht zur Fahrtrichtung in Fahrtrichtung verschwenkt wird.

3. Vorrichtung nach Anspruch 1 oder 2, **dadurch gekennzeichnet, dass** die Seitenklappe (2') und/oder die Dachklappe (6') in einer zur Rückseite des Fahrzeuges hervorstehenden Position verriegelbar oder verrastbar ist oder sind.

4. Vorrichtung nach einem der vorhergehenden Ansprüche, **dadurch gekennzeichnet, dass** die Vorrichtung (1') zwei Seitenklappen (2') und zwei Dachklappen (6') aufweist und jeweils eine Seitenklappe (2') über Verbindungsmittel (7') mit einer Dachklappe (6') verbunden ist.

5. Vorrichtung nach einem der vorhergehenden Ansprüche, **dadurch gekennzeichnet, dass** die Kurvenführung an der Seitenklappe (2') oder der Unterseite der Dachklappe (6') vorgesehen ist.

6. Fahrzeug, insbesondere Nutzfahrzeug oder Anhänger für ein Nutzfahrzeug, mit einem Laderaum, der an einer Rückseite durch zwei Türen (4) verschlossen ist und ein Dach aufweist, **dadurch gekennzeichnet, dass** mindestens eine Vorrichtung nach einem der vorhergehenden Ansprüche an dem Fahrzeug montiert ist.

7. Fahrzeug nach Anspruch 6, **dadurch gekennzeichnet, dass** die Seitenklappe (2, 2') an einer rückseitigen Tür (4) über Scharniere (3, 3') gehalten ist.

8. Fahrzeug nach Anspruch 6 oder 7, **dadurch gekennzeichnet, dass** die Dachklappe (6, 6') an der Tür (4) über Scharniere (11, 11') gehalten ist.

9. Fahrzeug nach einem der Ansprüche 6 bis 8, **dadurch gekennzeichnet, dass** in der hervorstehenden Position die Dachklappe (6, 6') das Dach des Fahrzeuges nach hinten verlängert.

10. Fahrzeug nach einem der Ansprüche 6 bis 9, **dadurch gekennzeichnet, dass** in einer hervorstehenden Position der Seitenklappe (2, 2') eine Seitenwand des Fahrzeuges nach hinten verlängert wird.

## Claims

1. Device (1') for improving the aerodynamics on a vehicle, in particular on a rear side of a truck or of a trailer for a truck, said device comprising a side flap (2') which can be attached to a side wall or to a door (4) of the vehicle and which is mounted via hinges (3') such as to be pivotable about a vertical axis, and a roof flap (6') which can be attached to a roof or to a door (4) of the vehicle and which is mounted via hinges (11') such as to be pivotable about a horizontal axis, wherein the side flap (2') is coupled to the roof flap (6') via connecting means (7') and the roof flap (6') is pivotable by pivoting the side flap (2'), **characterized in that** the connecting means (7') comprise an arcuate curve guide (7') forming a guide path for a dog (8') which is mounted such as to be movable in the curve guide (7') and which ensures forced guidance of the roof flap (6') when the side flap (2') is moved.

2. Device according to claim 1, **characterized in that**, when the side flap (2') is pivoted from a position substantially perpendicular to the direction of travel into the direction of travel, the roof flap (6') is pivoted by the connecting means (7') from a position substantially perpendicular to the direction of travel into the direction of travel.

3. Device according to claim 1 or 2, **characterized in that** the side flap (2') and/or the roof flap (6') can be locked or latched in a position protruding towards the rear of the vehicle.

4. Device according to one of the preceding claims, **characterized in that** the device (1') comprises two side flaps (2') and two roof flaps (6') and in each case a side flap (2') is connected to a roof flap (6') via connecting means (7').

5. Device according to one of the preceding claims, **characterized in that** the curve guide is provided on the side flap (2') or on the underside of the roof flap (6').

6. Vehicle, in particular a commercial vehicle or a trailer for a commercial vehicle, having a loading space which is closed at a rear side by two doors (4) and has a roof, **characterized in that** at least one device according to one of the preceding claims is mounted on the vehicle.

7. Vehicle according to claim 6, **characterized in that** the side flap (2, 2') is held on a rear door (4) via hinges (3, 3').

8. Vehicle according to claim 6 or 7, **characterized in that** the roof flap (6, 6') is held on the door (4) via hinges (11, 11').

9. Vehicle according to one of claims 6 to 8, **characterized in that**, in the protruding position, the roof flap (6, 6') extends the roof of the vehicle rearwards.

10. Vehicle according to one of claims 6 to 9, **characterized in that**, in a protruding position of the side flap (2, 2'), a side wall of the vehicle is extended rearwards.

## Revendications

1. Dispositif (1') permettant d'améliorer l'aérodynamique sur un véhicule, en particulier sur la face arrière d'un poids lourd ou d'une remorque pour un poids lourd comportant un volet latéral (2") pouvant être fixé sur une paroi latérale ou une porte (4) du véhicule qui est monté pivotant autour d'un axe vertical par l'intermédiaire de charnières (3') et un volet de toit (6') pouvant être fixé sur le toit ou une porte (4) du véhicule, qui est monté pivotant autour d'un axe horizontal, par l'intermédiaire de charnières (11'), le volet latéral (2') étant couplé au volet de toit (6') par l'intermédiaire de moyens de liaison (7'), et le volet de toit (6') pouvant pivoter suite à un pivotement du volet latéral (2'),
**caractérisé en ce que**
les moyens de liaison (7') comportent un guidage par came (7') en forme d'arc qui forme une piste de guidage pour un organe d'entraînement (8') qui est monté coulissant dans le guidage par came (7') et permet d'obtenir un guidage forcé du volet de toit (6') lorsque le volet latéral (2') est déplacé.

2. Dispositif conforme à la revendication 1,
**caractérisé en ce que**
lors d'un pivotement du volet latéral (2') entre une position essentiellement perpendiculaire à la direction de déplacement, et la direction de déplacement, les moyens de liaison (7') font pivoter le volet de toit (6') entre une position essentiellement perpendiculaire à la direction de déplacement et la direction de déplacement.

3. Dispositif conforme à la revendications 1 ou 2,
**caractérisé en ce que**
le volet latéral (2') et/ou le volet de toit (6') peut(peuvent) être verrouillé(s) ou encliqueté(s) dans une position en saillie sur le côté arrière du véhicule.

4. Dispositif conforme à l'une des revendications précédentes,
**caractérisé en ce qu'**
il comporte deux volets latéraux (2') et deux volets de toit (6'), et un volet latéral (2') est respectivement relié par des moyens de liaison (7') à un volet de toit (6').

5. Dispositif conforme à l'une des revendications précédentes,
**caractérisé en ce que**
le guidage par came est situé sur le volet latéral (2') ou sur la face inférieure du volet de toit (6').

6. Véhicule, en particulier, véhicule utilitaire ou remorque destinée à un véhicule utilitaire comportant un volume de chargement qui est fermé sur la face arrière par deux portes (4) et comporte un toit,
**caractérisé en ce qu'**
on moins un dispositif conforme à l'une des revendications précédentes est monté sur le véhicule.

7. Véhicule conforme à la revendication 6,
**caractérisé en ce que**
le volet latéral (2, 2') est maintenu sur une porte arrière (4) par l'intermédiaire de charnières (3, 3').

8. Véhicule conforme à la revendication 6 ou 7,
**caractérisé en ce que**
le volet de toit (6, 6') est maintenu sur la porte (4) par l'intermédiaire de charnières (11, 11').

9. Véhicule conforme à l'une des revendications 6, 8,
**caractérisé en ce que**
dans la position en saillie le volet de toit (6, 6') prolonge le toit du véhicule vers l'arrière.

10. Véhicule conforme à l'une des revendications 6 à 9,
**caractérisé en ce que**
dans une position en saillie le volet latéral (2, 2') prolonge une paroi latérale du véhicule vers l'arrière.
